(19) Europäisches Patentamt

European Patent Office

Office européen des brevets

(11) **EP 0 964 792 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **98910724.8**

(22) Anmeldetag: **05.03.1998**

(51) Int Cl.⁷: $B42C\ 9/00$, $C09J\ 163/00$

(86) Internationale Anmeldenummer:
**PCT/EP98/01228**

(87) Internationale Veröffentlichungsnummer:
**WO 98/40225 (17.09.1998 Gazette 1998/37)**

(54) **KLEBSTOFFSYSTEME FÜR EIN EIN- ODER MEHRSTUFIGES KLEBEBINDUNGSVERFAHREN, VERFAHREN ZUR KLEBEBINDUNG VON DRUCKSCHRIFTEN**

ADHESIVE SYSTEMS FOR A ONE OR MULTI STEP ADHESIVE BINDING METHOD, METHOD FOR ADHESIVE BINDING OF PRINTED MATTER

SYSTEMES ADHESIFS POUR PROCEDE DE BROCHAGE A UNE OU PLUSIEURS ETAPES, PROCEDE DE BROCHAGE D'IMPRIMES

(84) Benannte Vertragsstaaten:
**AT BE CH DE DK ES FI FR GB IE IT LI NL PT SE**

(30) Priorität: **07.03.1997 DE 19709413**

(43) Veröffentlichungstag der Anmeldung:
**22.12.1999 Patentblatt 1999/51**

(73) Patentinhaber: **Henkel Kommanditgesellschaft auf Aktien**
**40589 Düsseldorf-Holthausen (DE)**

(72) Erfinder: **ONUSSEIT, Hermann**
**D-42781 Haan (DE)**

(56) Entgegenhaltungen:
EP-A- 0 568 803       US-A- 4 412 048
US-A- 5 057 551

- **PATENT ABSTRACTS OF JAPAN vol. 017, no. 389 (M-1449), 21.Juli 1993 & JP 05 069686 A (NICHIBAN CO LTD), 23.März 1993,**
- **DATABASE WPI Section Ch, Week 9019 Derwent Publications Ltd., London, GB; Class A14, AN 90-144285 XP002069132 & JP 02 090 973 A (TAKEDA CHEM IND LTD) , 30.März 1990**
- **Handbook of Chemistry and Physics, 56th edition (1975), CRC Press, Cleveland, Ohio, Seiten F-47, F-49 und F-54.**

**Beschreibung**

Die vorliegende Erfindung betrifft ein mehrstufiges Verfahren zur Klebbindung von Broschuren, Büchern, Katalogen, Schreibblocks und ähnlichen Druckartikeln.

Für das schnelle und wirtschaftliche Herstellen von Büchern, Katalogen, Schreibblocks und Broschuren hat sich das Klebebindungsverfahren seit langem durchgesetzt. Bei derartigen Verfahren ist es Aufgabe des Klebstoffs, zum einen über eine Blattkantenverklebung die einzelnen Blätter zusammenzuhalten, zum anderen einen Umschlag oder ein Hinterklebematerial um den Buchblock zu befestigen.

Eine optimale Verklebung der einzelnen Blätter erreicht man, wenn sich die einzelnen Blattkanten sehr gut vom Klebstoff benetzen lassen, wofür in der Regel niedrigviskose Klebstoffe (z.B. Schmelzklebstoffe oder Dispersionsklebstoffe) bevorzugt werden.

Die Mitnahme der Umschläge erfordert jedoch in der Regel höherviskose Produkte, da die Umschläge zum Teil aus Papieren mit sehr hohem Flächengewicht bestehen, die sehr sperrig sind und nur bei einer bestimmten Anfangsklebrigkeit sicher mitgenommen werden.

Kann nur ein Klebstoff (one-shot-Verfahren) eingesetzt werden, muß die Viskosität so gewählt werden, daß ausreichende Blattkantenhaftung und sichere Mitnahme des Hinterklebematerials erfolgt. Da die beiden vorstehenden Anforderungen nicht immer mit einem einzigen Klebstoff zu verwirklichen sind, ist man frühzeitig auf die Idee gekommen, das sogenannte two-shot-Verfahren einzuführen. Hierbei werden zwei unterschiedliche Klebstoffe nacheinander eingesetzt. Zunächst wird der Buchblock sehr dünn, vorzugsweise mit einer Schichtdicke von weniger als 0,2 mm, mit einer Dispersion oder einem Schmelzklebstoff beschichtet. Bei Dispersionsauftrag wird dann der Klebstoff in der Maschine innerhalb von einigen Sekunden getrocknet, beispielsweise mit einem Infrarottrockner. Anschließend wird in einem zweiten Schritt ein weiterer Klebsstoff aufgetragen. Je nach System ist das ein Dispersionsklebstoff bei Raumtemperatur oder ein Schmelzklebstoff bei Temperaturen von 120 bis 200 °C. Hierbei ergibt der niedrigviskose Klebstoff in Schritt 1 die Blatthaftung und der hochviskose Dispersionsklebstoff oder Schmelzklebstoff in Schritt 2 die Festigkeit des Buchblocks.

Ein Beispiel für ein two-shot-Verfahren wird in WO 85/04669 beschrieben. Dabei wird als erster Klebstoff ein Haftungsvermittler auf Wasserbasis und als zweiter Klebstoff ein Schmelzklebstoff eingesetzt, wobei der Schmelzklebstoff ein segmentiertes Monoalkylen-Vinylacetatcopolymer und der Haftungsvermittler auf Wasserbasis eine wäßrige Kautschuk-Latex-Emulsion enthält. Hier wird also, wie vorstehend beschrieben, zunächst ein nicht - reaktiver niedrigviskoser Klebstoff in Form einer Dispersion und nach dem Trocknen dieser Schicht der Heißschmelzklebstoff aufgetragen.

Der Einsatz von reaktiven Systemen wird sowohl in one-shot-Verfahren zum Beispiel mittels reaktiver Polyurethanschmelzklebstoffe als auch in two-shot-Verfahren mittels einer zweikomponentigen reaktiven Dispersion sowie eines Hotmelts verwirklicht.

Die EP-A 0 568 803 betrifft ein Buchbindeverfahren, bei dem nacheinander ein Haftungsvermittler auf Wasserbasis und ein Schmelzklebstoff auf den Rücken eines Buchblocks aufgegeben werden, wobei es sich bei dem haftvermittelnden Klebstoff um eine wäßrige Dispersion eines polymeren Klebharzes und eines Isocyanathärters handelt. Bei diesem two-shot-Verfahren wird also zunächst eine zweikomponentige reaktive Dispersion und nach dem Trocknen dieser Dispersion der Schmelzklebstoff aufgetragen.

Nachteilig ist bei dem aus der EP-A 0 568 803 bekannten Verfahren, daß dort in einem der beiden Reaktionsschritte stets das zu vernetzende Polymer mit einem weiteren Stoff reagieren muß. Solche Systeme erfordern daher entweder - wenn die zweite Komponente Wasser, beispielsweise Feuchtigkeit aus der Luft, ist - besondere Auftragungssysteme, um ein frühzeitiges Vernetzen vor dem Auftrag zu vermeiden, oder sie besitzen - wenn es sich um Zweikomponentensysteme handelt, bei denen chemische Komponenten gemischt werden - eine nur begrenzte Topfzeit.

Der vorliegenden Erfindung liegt die Aufgabe zugrunde, ein verbessertes mehrstufiges Klebebindungsverfahren im Buchbindeprozeß bereitzustellen, das insbesondere eine einfachere Handhabung ermöglicht.

Man erhält einen dafür geeigneten Klebstoff dadurch, daß er wenigstens einen Photoinitiator enthält, wodurch eine Härtung einer niedermolekularen Komponente mittels elektromagnetischer Strahlung, z.B. durch UV- oder stärkerer elektromagnetischer Strahlung, radikalisch oder kationisch erfolgen kann. Darüber hinaus können noch zusätzlich bekannte reaktive Gruppen vorhanden sein, z.B. NCO-Gruppen, sei es gebunden an dieselben Moleküle, die zur strahleninduzierten Reaktion befähigt sind oder gebunden an davon verschiedene Moleküle.

Gegenstand der vorliegenden Erfindung ist daher ein Verfahren zur Klebebindung von Broschuren, Katalogen, Büchern, Schreibblocks und ähnlichen Druckschriften nach dem mehrstufigen Klebebindungsverfahren mit Hilfe eines Klebstoffsystems aus den Klebstoffen A und B, bei dem der Block zunächst mit einem vernetzbaren Film des Klebstoffs A, der mindestens einen Photoinitiator und mindestens einen Klebstoff enthält, der zu einer strahleninduzierten Reaktion befähigt ist und eine Viskosität bei der Verarbeitungstemperatur von 0,100 bis 20 Pas aufweist, in einer Dicke von weniger als 0,2 mm beschichtet wird und nach dem Abbinden schließlich mit dem Klebstoff B, der bei Verarbeitungstemperatur eine Viskosität von 1 bis 20 Pas aufweist, versehen wird, wobei nach dem Auftrag des Klebstoffs A auf der Blattkante eine Behandlung mit einer elektromagnetischen Strahlung mit Wellenlängen kleiner als 600 nm, einer Elektronenstrahlung, einer Röntgen- oder Gammastrahlung erfolgt.

Das erfindungsgemäße Verfahren umfaßt den Klebstoff A, nämlich einen niedrigviskosen strahlen-vernetzbaren Klebstoff (z.B. lösungsmittelfreie oder lösungsmittelhaltige Systeme oder Dispersion), der eine Viskosität bei Verarbeitungstemperatur von 100 bis 10 000 mPas, vorzugsweise von 100 bis 1 000 mPas aufweist, und weiterhin wenigstens einen Photoinitiator enthält, sowie den Klebstoff B, der eine Viskosität bei Verarbeitungstemperatur von 1 000 bis 20 000 mPas, vorzugsweise 5 000 bis 10 000 mPas aufweist.

Vorteilhaft bei diesem System ist neben der praktisch nicht vorhandenen Topfzeit, daß hierbei keine Mischungsverhältnisse zu beachten sind und man keine speziellen Auftragungsgeräte benötigt. Damit ist eine technisch einfache Herstellung möglich.

Unter einem "mehrstufigen Klebebindungsverfahren" im Sinne der vorliegenden Erfindungen sind Klebebindungsverfahren mit mindestens zwei Auftragsstufen zu verstehen, wobei das Two-shot-Verfahren bevorzugt ist.

Unter einer "strahleninduzierten Reaktion" wird eine radikalische oder kationische Reaktion unter Erhöhung des Molekulargewichts verstanden. Dementsprechend basiert der Klebstoff A auf lösungsmittelfreien oder lösungsmittelhaltigen Mischungen in Form von Lösungen oder wäßrigen Dispersionen von vorzugsweise Acrylat-Monomeren und/oder acrylatmodifizierten Polymeren und/oder aliphatischen Epoxid-Monomeren und/oder epoxidmodifizierten Polymeren.

Im Falle der Molekulargewichtserhöhung durch radikalische Reaktion handelt es sich bei der funktionellen Gruppe in der Regel ganz allgemein um eine olefinisch ungesättigte Doppelbindung. Im Rahmen der vorliegenden Erfindung sind hierbei olefinisch ungesättigte Doppelbindungen bevorzugt, wie sie beispielsweise in den Derivaten der Acrylsäure oder des Styrols vorliegen. Besonders geeignet und im Rahmen der vorliegenden Erfindung bevorzugt verwendet werden die Derivate der Acrylsäure, beispielsweise die Acrylate und die Meth-acrylate mit 1 bis 16, vorzugsweise 1 bis 4 C-Atomen in der Alkohol-Komponente.

Als radikalisch reaktive Komponente im Klebstoff A ist vorzugsweise mindestens ein Polymeres mit einem Molekulargewicht von mindestens 800 enthalten. Zum Einsatz als reaktive Komponente sind alle üblicherweise in Klebstoffen einsetzbaren polymeren Verbindungen geeignet, beispielsweise Polyvinylacetat, Polyvinylidenchlorid, Polyacrylate, Polyester, Polyether, Polycarbonate, Polyacetale, Polyurethane, Polyolefine oder Kautschukpolymere wie Nitril-, Chloropren-, Isopren- oder Styrol/Butadien-Kautschuk, sofern sie mindestens eine durch Bestrahlung mit UV-Licht oder mit Elektronenstrahlen polymerisierbare funktionelle Gruppe und gegebenenfalls mindestens eine zur Reaktion mit einer mindestens ein acides Wasserstoffatom aufweisenden Verbindung fähige funktionelle Gruppe aufweisen, z.B. eine NCO-Gruppe.

Vorzugsweise werden in den Klebstoffen als reaktive Komponente jedoch Polyacrylate, Polyester oder Polyurethane eingesetzt, da die genannten Polymeren eine besonders einfache Möglichkeit bieten, die erfindungsgemäß erforderlichen funktionellen Gruppen am Polymermolekül anzubringen.

Besonders einfach lassen sich die erfindungsgemäß als reaktive Komponente einsetzbaren Polymeren herstellen, indem von einem Basis-Polymeren ausgegangen wird, das mindestens zwei mit Isocyanatgruppen reaktionsfähige funktionelle Gruppen, vorzugsweise OH-Gruppen, im Polymermolekül aufweist. An ein solches Basis-Polymeres kann durch Umsetzung mit einem Polyisocyanat oder einem geeignet funktionalisierten Monoisocyanat auf besonders einfache Weise die gewünschte funktionelle Gruppe angebracht werden.

Zum Einsatz als Basis-Polymeres geeignet ist beispielsweise ein Polymeres ausgewählt aus einer Gruppe enthaltend Polyester, Polyether, Polycarbonate oder Polyacetale mit einem Molekulargewicht ($M_n$) von mindestens etwa 200, oder Gemische aus zwei oder mehr davon, die terminale OH-Gruppen aufweisen.

Im Rahmen der vorliegenden Erfindung als Basis-Polymere zur Herstellung der reaktiven Komponente einsetzbare Polyester können in einer dem Fachmann bekannten Weise durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen.

Im Rahmen der vorliegenden Erfindung zur Herstellung des Basis-Polymeren geeignete Polycarbonsäuren können auf einem aliphatischen, cycloaliphatischen, araliphatischen, aromatischen oder heterocyclischen Grundkörper aufgebaut sein und gegebenenfalls neben den mindestens zwei Carbonsäuregruppen noch einen oder mehrere im Rahmen einer Polykondensation nicht-reaktive Substituenten, beispielsweise Halogenatome oder olefinisch ungesättigte Doppelbindungen, aufweisen. Gegebenenfalls können anstatt der freien Carbonsäuren auch deren Säureanhydride (soweit existent), oder deren Ester mit $C_{1-5}$-Monoalkoholen, oder Gemische aus zwei oder mehr davon, zur Polykondensation eingesetzt werden. Geeignete Polycarbonsäuren sind beispielsweise Bernsteinsäure, Adipinsäure, Korksäure, Azelainsäure, Sebacinsäure, Glutarsäure, Glutarsäureanhydrid, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäuren oder Trimerfettsäuren oder Gemische aus zwei oder mehr davon. Gegebenenfalls können untergeordnete Mengen an monofunktionellen Fettsäuren im Reaktionsgemisch vorliegen.

Als Diole zur Herstellung eines als Basis-Polymeres einsetzbaren Polyesters oder Polycarbonats können eine Vielzahl von Polyolen eingesetzt werden. Beispielsweise sind dies aliphatische Polyole mit 2 bis 4 OH-Gruppen pro Molekül. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich für den Fachmann aus einer schrittweisen Verlängerung der Kohlenwasserstoffkette um jeweils eine $CH_2$-Gruppe oder unter Einführung von Verzweigungen in die Kohlenstoffkette ergeben, oder Gemische aus zwei oder mehr davon. Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4. Bei den höherfunktionellen Alkoholen können eine oder mehr OH-Gruppen mit monofunktionellen Carbonsäuren mit 1 bis etwa 20 C-Atomen verestert sein, mit der Maßgabe, daß im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.

Weiterhin können als Polyolkomponente zur Herstellung der Basis-Polymeren die Umsetzungsprodukte niedermolekularer, polyfunktioneller Alkohole mit Alkylenoxiden, sogenannte Polyetherpolyole, eingesetzt werden. Polyetherpolyole, die zur Herstellung von als Basis-Polymeren geeigneten Polyestern eingesetzt werden sollen, werden vorzugsweise durch Umsetzung von Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten Alkylenoxiden zu Polyetherpolyolen geeignet. Besonders geeignet sind aus den genannten Umsetzungen erhältliche Polyetherpolyole mit einem Molekulargewicht ($M_n$) von etwa 100 bis etwa 3.000, vorzugsweise von etwa 200 bis etwa 2.000. Die genannten Polyetherpolyole können mit den oben genannten Polycarbonsäuren in einer Polykondensationsreaktion zu den als Basis-Polymeren einsetzbaren Polyestern umgesetzt werden.

Ebenfalls als Basis-Polymere mit terminalen OH-Gruppen geeignet sind Polyetherpolyole, wie sie beispielsweise in der oben geschilderten Weise entstehen. Polyetherpolyole werden üblicherweise durch Umsetzung einer Startverbindung mit mindestens zwei reaktiven Wasserstoffatomen mit Alkylen- oder Arylenoxiden, beispielsweise Ethylenoxid, Propylenoxid, Butylenoxid, Styroloxid, Tetrahydrofuran oder Epichlorhydrin oder Gemischen aus zwei oder mehr davon, erhalten. Geeignete Startverbindungen sind beispielsweise Wasser, Ethylenglykol, Propylenglykol-1,2 oder -1,3, Butylenglykol-1,4, oder -1,3, Hexandiol-1,6, Octandiol-1,8, Neopentylglykol, 1,4-Hydroxymethylcyclohexan, 2-Methyl-1,3-Propandiol, Glycerin, Trimethylolpropan, Hexantriol-1,2,6, Butantriol-1,2,4, Trimethylolethan, Pentaerythrit, Mannitol, Sorbitol, Methylglycoside, Zucker, Phenol, Isononylphenol, Resorcin, Hydrochinon, 1,2,2- oder 1,1,2-Tris-(Hydroxyphenyl)-Ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen.

Ebenfalls zum Einsatz als Basiskomponente geeignet sind Polyetherpolyole, die durch Vinylpolymere modifiziert wurden. Derartige Produkte sind beispielsweise erhältlich, indem Styrol- oder Acrylnitril oder deren Gemisch in Gegenwart von Polyethern polymerisiert wird.

Ein im Rahmen der vorliegenden Erfindung besonders zum Einsatz als Basis-Polymeres geeignetes Polyetherpolyol ist Polypropylenglykol mit einem Molekulargewicht von etwa 300 bis etwa 1.500.

Ebenfalls als Basis-Polymeres oder als Polyolkomponente zur Herstellung des Basis-Polymeren geeignet sind Polyacetale. Unter Polyacetalen werden Verbindungen verstanden, wie sie durch Umsetzung von Glykolen, beispielsweise Diethylenglykol oder Hexandiol, mit Formaldehyd erhältlich sind. Im Rahmen der Erfindung einsetzbare Polyacetale können auch durch die Polymerisation cyclischer Acetale erhalten werden.

Weiterhin als Basis-Polymere oder als Polyole zur Herstellung der Basis-Polymeren geeignet, sind Polycarbonate. Polycarbonate können beispielsweise durch die Reaktion der oben genannten Polyole, insbesondere von Diolen wie Propylenglykol, Butandiol-1,4 oder Hexandiol-1,6, Diethylenglykol, Triethylenglykol oder Tetraethylenglykol oder Gemischen aus zwei oder mehr davon, mit Diarylcarbonaten, beispielsweise Diphenylcarbonat oder Phosgen, erhalten werden.

Ebenfalls als Basis-Polymere oder als Polyolkomponente zur Herstellung der Basis-Polymeren geeignet sind OH-Gruppen tragende Polyacrylate. Solche Polyacrylate sind beispielsweise erhältlich durch Polymerisation von ethylenisch ungesättigten Monomeren, die OH-Gruppen tragen. Solche Monomeren sind beispielsweise durch die Veresterung von ethylenisch ungesättigten Carbonsäuren und difunktionellen Alkoholen erhältlich, wobei der Alkohol in der Regel nur in einem leichten Überschuß vorliegt. Hierzu geeignete, ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Falls das Molekulargewicht des Basis-Polymeren für den Einsatz als reaktive Komponente zu gering ist, kann eine Erhöhung des Molekulargewichts beispielsweise durch Kettenverlängerung erfolgen. Vorteilhafterweise wird hierzu das terminale OH-Gruppen tragende Basis-Polymere zunächst mit einer in Bezug auf die terminalen OH-Gruppen polyfunktionellen, vorzugsweise einer difunktionellen Verbindung umgesetzt. Als polyfunktionelle Verbindungen im erfindungsgemäßen Sinne eignen sich daher besonders Polyepoxide, insbesondere Diepoxide, oder vorzugsweise Polyisocyanate, insbesondere Diisocyanate. Besonders bevorzugt sind im Rahmen der vorliegenden Erfindung die Diisocyanate. Die zur Erzielung einer bestimmten Molekulargewichtserhöhung erforderlichen stöchiometrischen Verhältnisse zwischen Basis-Polymerem und polyfunktioneller Verbindung sind dem Fachmann bekannt. In der Regel wird es jedoch so sein, daß zum Erzielen einer Kettenverlängerung ein Überschuß an Basis-Polymerem bei der Kettenverlängerungsreaktion vorliegt, wobei die entstehenden, kettenverlängerten Basis-Polymeren wieder terminale OH-Gruppen aufweisen.

Um zum Einsatz als reaktive Komponente geeignet zu sein, müssen die oben genannten, terminale OH-Gruppen aufweisenden, gegebenenfalls kettenverlängerten Basis-Polymere mit mindestens einer durch Bestrahlung mit UV-Licht oder mit Elektronenstrahlen polymerisierbaren funktionellen Gruppe und gegebenenfalls mindestens einer, durch Reaktion mit einer mindestens ein acides Wasserstoffatom aufweisenden Verbindung polymerisierbaren, funktionellen Gruppe versehen werden.

Hierzu werden die Basis-Polymeren zweckmäßigerweise mit einer in bezug auf die terminalen OH-Gruppen polyfunktionellen, vorzugsweise einer difunktionellen Verbindung umgesetzt. Als polyfunktionelle Verbindungen im erfindungsgemäßen Sinne eignen sich die schon zur Kettenverlängerung einsetzbaren polyfunktionellen Verbindungen, besonders Polyepoxide, insbesondere Diepoxide, vorzugsweise jedoch Polyisocyanate, insbesondere Diisocyanate. Besonders bevorzugt sind im Rahmen der vorliegenden Erfindung die Diisocyanate. Geeignete polyfunktionelle Polyisocyanate, die zur Umsetzung mit den Basis-Polymeren geeignet sind, enthalten im Durchschnitt zwei bis höchstens etwa vier Isocyanatgruppen. Beispiele für geeignete Isocyanate sind 1,5-Naph-thalindiisocyanat, 4,4'-Diphenylmethandiisocyanat (MDI), hydriertes MDI (Dicyclohexylmethandiisocyanat, $H_{12}$-MDI), Xylylendiisocyanat (XDI), Tetramethylxylylendiisocyanat (TMXDI), 4,4'-Diphenyldimethylmethandiisocyanat sowie Di- und Tetraalkyldiphenylmethandiisocyanat, 4,4'-Dibenzyldiisocyanat, 1,3-Phenylendiisocyanat, 1,4-Phenylendiisocyanat, 2,4- und 2,6-Toluylendiisocyanat (TDI) und deren Gemische, insbesondere ein Gemisch enthaltend etwa 20 % 2,4-und 80 Gew.-% 2,6-Toluylendiisocyanat, 1-Methyl-2,4-diisocyanatocyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, 1,4-Butandiisocyanat, 1,6-Hexandiisocyanat (HDI), Cyclohexan-1,4-diisocyanat, Ethylendiisocyanat, Phthalsäurebisisocyanatoethylester; Polyisocyanate, die reaktive Halogenatome enthalten, wie 1-Chlormethylphenyl-2,4-diisocyanat, 1-Bromethylphenyl-2,6-diisocyanat, 3,3-Bis-chlormethylether-4,4'-diphenyldi-isocyanat. Ebenso einsetzbar sind schwefelhaltige Polyisocyanate, wie sie beispielsweise durch Umsetzung von 2 mol Hexamethylendiisocyanat mit 1 mol Thiodiglykol oder Dihydroxydihexylsulfid erhältlich sind. Andere Diisocyanate sind Trimethylhexamethylendiisocyanate, 1,4-Diisocyanatobutan, 1,2-Diisocyanatododekan und Dimerfettsäurediisocyanate. Triisocyanatoisocyanurate können durch Trimerisierung von Diisocyanaten bei erhöhten Temperaturen, beispielsweise bei etwa 200° und/oder in Gegenwart eines Katalysators, beispielsweise einem Amin, erhalten werden, und sind ebenfalls im Rahmen der vorliegenden Erfindung einsetzbar. Die genannten Polyisocyanate können im Rahmen der vorliegenden Erfindung einzeln oder als Gemisch aus zwei oder mehr der genannten Polyisocyanate eingesetzt werden. Vorzugsweise wird im Rahmen der vorliegenden Erfindung ein einzelnes Polyisocyanat oder ein Gemisch aus zwei oder drei Polyisocyanaten eingesetzt. Als einzeln oder im Gemisch einzusetzende Polyisocyanate bevorzugt sind HDI, MDI oder TDI, beispielsweise ein Gemisch aus MDI und TDI.

Vorzugsweise wird das Basis-Polymere mit der polyfunktionellen Verbindung, vorzugsweise mit dem Diisocyanat, in einem Verhältnis von 1:>2 umgesetzt, wobei der Überschuß an polyfunktioneller Verbindung beispielsweise gerade so groß gewählt wird, daß eine Kettenverlängerung des Basis-Polymeren vermieden wird aber nur geringe Mengen an nicht-umgesetzter polyfunktioneller Verbindung in der reaktiven Komponente vorliegen. Insbesondere beim Einsatz eines Diisocyanats als polyfunktionelle Verbindung kann eine solche vorgehensweise vorteilhaft sein. Auf diese Weise erhält man ein Polymeres, das terminal zwei funktionelle Gruppen trägt, die durch Reaktion mit einer mindestens ein acides Wasserstoffatom aufweisenden Verbindung polymerisierbar sind.

Um aus einem solchen Polymeren ein zum Einsatz als reaktive Komponente geeignetes Polymere zu erhalten, setzt man das Polymere zweckmäßigerweise mit einer Verbindung um, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren geeignete funktionelle Gruppe aufweist. Zu diesem Zweck besonders gut geeignet sind die Hydroxyalkylacrylate oder -methacrylate, d.h. Umsetzungsprodukte der Acrylsäure oder Methacrylsäure mit difunktionellen Alkoholen. Besonders geeignet sind im Rahmen der vorliegenden Erfindung beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Zum Einsatz als reaktive Komponente geeignete Polymere lassen sich beispielsweise auch in mehreren Schritten dadurch erhalten, daß man in einem ersten Schritt das terminale OH-Gruppen tragende Basis-Polymere mit einer Verbindung umsetzt, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweist. Eine solche Verbindung ist beispielsweise Styrolisocyanat. Weitere derartige Verbindungen lassen sich beispielsweise durch Umsetzung einer etwa äquimolaren Menge eines Hydroxyalkylacrylats oder -methacrylats mit einem Diisocyanat erhalten. Nach Umsetzung einer etwa äquimolaren Menge des (gegebenenfalls durch Kettenverlängerung an das zum Einsatz in Komponente A geforderte Molekulargewicht angepaßten) Basis-Polymeren mit einer derartigen Verbindung in einem zweiten Schritt entsteht ein Polymeres, das terminal sowohl eine OH-Gruppe als auch eine durch Bestrahlung mit UV-Licht oder mit Elektronenstrahlen polymerisierbare funktionelle Gruppe aufweist. Setzt man dieses Polymere beispielsweise mit einem Diisocyanat um, so erhält man ein Polymeres, das zum Einsatz als reaktive Komponente geeignet ist.

Es ist ebenfalls möglich, die beiden oben genannten Schritte zusammenzufassen, indem man ein Basis-Polymeres, ein Diisocyanat (oder gegebenenfalls eine andere polyfunktionelle Verbindung im Sinne des oben gesagten) und eine Verbindung, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweist, in einem geeigneten molaren Verhältnis miteinander umsetzt, so daß die Anteile der beiden Typen funktioneller Gruppen im durch eine solche Umsetzung erhältlichen Polymerengemisch jeweils zwischen größer als 0% und kleiner als 100% (bezogen auf funktionelle Gruppen) variieren. Gute Ergebnisse lassen sich beispielsweise erhalten, wenn etwa 1 bis etwa 50% der im Polymeren als terminale Gruppen vorliegenden funktionellen Gruppen durch Bestrahlung mit UV-Licht oder mit Elektronenstrahlen polymerisierbare funktionelle Gruppen sind, vorzugsweise etwa 5 bis etwa 30%, und besonders bevorzugt etwa 8 bis etwa 15%.

Typische NCO-Werte für zum Einsatz als reaktive Komponente geeignete Polymere sind etwa 2,5 Gew.-% bis etwa 7 Gew.-%, insbesondere etwa 3,5 Gew.-% bis etwa 5 Gew.-%.

Die im Rahmen der vorliegenden Erfindung eingesetzte reaktive Komponente kann nur aus einem der beschriebenen Polymeren bestehen, sie kann jedoch vorteilhafterweise ein Gemisch aus zwei oder mehr der genannten Polymeren darstellen. So ist es beispielsweise vorteilhaft, wenn als Basis-Polymeres ein Gemisch aus einem oder mehreren Polyesterpolyolen und einem oder mehreren Polyetherpolyolen eingesetzt wird. Die verschiedenen Basis-Polymeren können sich dabei beispielsweise im Molekulargewicht ($M_n$) oder im chemischen Aufbau, oder in beidem, unterscheiden.

In einer bevorzugten Ausführungsform der Erfindung werden zur Herstellung der reaktiven Komponente als Basis-Polymere etwa 20 bis etwa 40 Gew.-% Polyesterpolyole und etwa 20 bis etwa 60 Gew.-% Polyetherpolyole, bezogen auf die gesamte Komponente A, eingesetzt. In einer weiteren bevorzugten Ausführungsform werden neben einem Polyesterpolyol noch mindestens zwei unterschiedliche Polyetherpolyole als Basis-Polymere eingesetzt, insbesondere ein Gemisch aus einem Polyetherpolyol mit einem Molekulargewicht von etwa 800 bis etwa 1.500 und einem Polyetherpolyol mit einem Molekulargewicht von etwa 300 bis etwa 700.

Zur Herstellung der reaktiven Komponente können, wie oben beschrieben, die einzelnen Basis-Polymeren so mit funktionellen Gruppen ausgestattet und gegebenenfalls kettenverlängert werden, daß sie direkt zum Einsatz als reaktive Komponente geeignet sind. In einer bevorzugten Ausführungsform der Erfindung wird jedoch ein Gemisch aus OH-Gruppen tragenden Basis-Polymeren zunächst mit einer geeigneten Menge an Polyisocyanaten umsetzt und anschließend mit Verbindungen, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweisen, in einem geeigneten molaren Verhältnis zur Reaktion gebracht.

Als reaktive Komponente kann auch mindestens eine Verbindung mit einem Molekulargewicht von etwa 100 bis etwa 8000 eingesetzt werden, die mindestens zwei durch Bestrahlung mit UV-Licht oder mit Elektronenstrahlen polymerisierbare funktionelle Gruppen aufweist.

Als reaktive Komponente sind daher besonders di- oder höherfunktionelle Acrylatoder Methacrylatester geeignet. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen.

Als Polyole zur Herstellung einer derartigen reaktiven einsetzbaren Acrylat- oder Methacrylatesters können eine Vielzahl von Polyolen eingesetzt werden. Beispielsweise sind dies aliphatische Polyole mit 2-4 OH-Gruppen pro Molekül und 2 bis etwa 40 C-Atomen. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich für den Fachmann aus einer schrittweisen Verlängerung der Kohlenwasserstoffkette um jeweils eine $CH_2$-Gruppe oder unter Einführung von Verzweigungen in die Kohlenstoffkette ergeben, oder Gemische aus zwei oder mehr davon.

Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4. Bei den höherfunktionellen Alkoholen können eine oder mehr OH-Gruppen mit monofunktionellen Carbonsäuren mit 1 bis etwa 20 C-Atomen verestert sein, mit der Maßgabe, daß im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.

Weiterhin können als Polyolkomponente zur Herstellung der Acrylat- oder Methacrylatester die Umsetzungsprodukte niedermolekularer, polyfunktioneller Alkohole mit Alkylenoxiden, sogenannte Polyetherpolyole, eingesetzt werden. Polyetherpolyole, die zur Herstellung von als Basis-Polymeren geeigneten Polyestern eingesetzt werden sollen werden vorzugsweise durch Umsetzung von Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandioten, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten Alkylenoxiden zu Polyetherpolyolen geeignet. Besonders geeignet sind aus den genannten Umsetzungen erhältliche Polyetherpolyole mit einem Molekulargewicht ($M_n$) von etwa 100 bis etwa 2000, vorzugsweise von etwa 150 bis etwa 1500, insbesondere von etwa 150 bis etwa 800.

Acrylatester aliphatischer Diole mit 2 bis etwa 40 Kohlenstoffatomen umfassen beispielsweise Neopentylglykoldi(meth)acrylat, 1,6-Hexandioldi(meth)acrylat, Trimethylolpropantri(meth)acrylat, Pentaerythrittetra(meth)acrylat, sowie (Meth)acrylatester des Sorbits und anderer Zuckeralkohole. Diese (Meth)acrylatester von aliphatischen oder cycloaliphatischen Diolen können mit einem aliphatischen Ester oder einem Alkylenoxid modifiziert werden. Die durch einen aliphatischen Ester modifizierten Acrylate umfassen beispielsweise Neopentylglykolhydroxypivalatdi(meth)acrylat, Caprolacton-modifizierte Neopentylglykolhydroxypivalatdi(meth)acrylate und dergleichen. Die Alkylenoxid-modifizierten Acrylatverbindungen umfassen beispielsweise Ethylenoxid-modifizierte Neopentylglykoldi(meth)acrylate, Propylenoxid-modifizierte Neopentylglykoldi(meth)acrylate, Ethylenoxid-modifizierte 1,6-Hexandioldi(meth)acrylate oder Propylenoxid-modifizierte 1,6-Hexandioldi(meth)acrylate oder Gemische aus zwei oder mehr davon.

Auf Polyetherpolyolen aufgebaute Acrylatmonomere umfassen beispielsweise Neopentylglykol-modifizierte Trimethylolpropandi(meth)acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra(meth)acrylat, Tris[(meth)acryloxyethyethyl]isocyanurat, Caprolacton-modifizierte Tris[(meth)acryloxyethyl]isocyanurate oder Trimethylolpropantetra(meth)acrylat oder Gemische aus zwei oder mehr davon.

Unter den genannten Di-, Tri- oder höherfunktionellen Acrylatmonomeren, die erfindungsgemäß als reaktive Komponente einsetzbar sind, sind Tripropylenglykoldiacrylat, Neopentylglykolpropoxylatdi(meth)acrylat, Trimethylolpropantri(meth)acrylat und Pentaerythritoltriacrylat bevorzugt.

Die erfindungsgemäß verwendeten Klebstoffe A enthalten die reaktiven Komponenten in einer Menge von etwa 10 bis etwa 99,9 Gew.-%, vorzugsweise etwa 15 bis etwa 99 Gew.-%.

Die molaren Verhältnisse zwischen Basis-Polymerem und der Verbindung, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren fähige funktionelle Gruppe aufweist können bei der Umsetzung in weiten Grenzen variieren. In der Regel gilt, daß ein höherer Anteil an durch Bestrahlung mit UV-Licht oder mit Elektronenstrahlen polymerisierbaren funktionellen Gruppen in der reaktiven Komponente zu einer höheren Festigkeit einer Klebeverbindung führt, während ein höherer Anteil an mit einer mindestens ein acides Wasserstoffatom aufweisenden Verbindung reaktiven, funktionellen Gruppen eine höhere Endfestigkeit zur Folge hat.

Setzt man beispielsweise das Basis-Polymere mit der Verbindung, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren fähige funktionelle Gruppe aufweist, in einem molaren Verhältnis von etwa 1:1 um, so trägt im daraus erhältlichen Polymerengemisch im Mittel jedes Polymermolekül sowohl eine durch Bestrahlung mit UV-Licht oder mit Elektronenstrahlen polymerisierbare funktionelle Gruppe als auch eine mit einer mindestens ein acides Wasserstoffatom aufweisenden Verbindung reaktive, funktionelle Gruppe. Entsprechend lassen sich die Anteile der beiden Typen funktioneller Gruppen im durch eine solche Umsetzung erhältlichen Polymerengemisch jeweils zwischen größer als 0 und kleiner als 100% (bezogen auf funktionelle Gruppen im Sinne der vorliegenden Erfindung) variieren. Gute Ergebnisse lassen sich beispielsweise erhalten, wenn etwa 100 bis etwa 10% der im Polymeren als terminale Gruppen vorliegenden funktionellen Gruppen durch Bestrahlung mit UV-Licht oder mit Elektronenstrahlen polymerisierbare funktionelle Gruppen sind, vorzugsweise etwa 1 bis etwa 50%, und besonders bevorzugt etwa 8 bis etwa 15%.

Im Falle der Molekulargewichtserhöhung durch kationische Reaktion handelt es sich um Styrole, Vinylether und Epoxide, seien es niedermolekulare Verbindungen oder entsprechend modifizierte makromolekulare Verbindungen, insbesondere um Verbindungen mit Epoxidgruppen.

Als "Epoxygruppe" wird im Rahmen des vorliegenden Textes eine funktionelle Gruppe bezeichnet, die einen Oxiran-Ring aufweist. Solche Epoxygruppen lassen sich in einer sich in einer dem Fachmann bekannten Weise kationisch initiiert polymerisieren. Der im Rahmen der vorliegenden Erfindung eingesetzte Klebstoff kann eine aliphatische Verbindung mit mindestens einer Epoxygruppe als ausschließlichen Bestandteil enthalten, es kann jedoch auch ein Gemisch aus zwei oder mehr Verbindungen mit mindestens einer Epoxygruppe eingesetzt werden. Außerdem kann die Epoxid-Verbindung auch zusammen mit radikalisch reagierenden Verbindungen mit den oben beschriebenen olefinisch ungesättigten Doppelbindungen, insbesondere mit den Acrylat-Monomeren und/oder acrylatmodifizierten Polymeren eingesetzt werden, unter Umständen auch mit den Isocyanat-Verbindungen.

Es ist zum Aufbau von Polymeren ausreichend, wenn die als Bestandteil des Klebstoffs vorliegende Verbindung mit mindestens einer Epoxygruppe lediglich eine Epoxygruppe aufweist. Es kann jedoch gegebenenfalls zur Erzielung eines höheren Vernetzungsgrades im Klebstoffilm wünschenswert sein, wenigstens anteilig eine oder mehrere Verbindungen mit mehr als einer Epoxygruppe im Molekül als Bestandteil des Klebstoffs A einzusetzen. Vorteilhafterweise weisen die eingesetzten Verbindungen eine bis etwa vier Epoxygruppen pro Molekül auf. Besonders bevorzugt ist es, wenn der durchschnittliche Epoxygruppengehalt des gesamten Klebstoffs A bei etwa 1 bis etwa 2,5, besonders bevorzugt bei etwa 1,5 bis etwa 2,0 liegt.

Grundsätzlich kann als Verbindung mit mindestens einer Epoxygruppe ein niedermolekulares Epoxyd eingesetzt werden, es können jedoch auch höhermolekulare Epoxide oder Gemische aus niedermolekularen und höhermolekularen Epoxiden zum Einsatz kommen.

Unter "niedermolekular" werden im Rahmen des vorliegenden Textes Verbindungen mit mindestens einer Epoxygruppe verstanden, die ein Molekulargewicht von nicht mehr als etwa 400 aufweisen. Verbindungen mit mindestens einer Epoxygruppe und einem Molekulargewicht von mehr als 400 werden entsprechend im Rahmen des vorliegenden Textes als "höhermolekular" bezeichnet.

Höhermolekulare Verbindungen mit mindestens einer Epoxygruppe können die Epoxygruppe beispielsweise endständig am Kettenende einer Polymerkette aufweisen, die Epoxygruppe kann jedoch auch innerhalb des Polymergerüsts oder seitenständig zum Polymergerüst gebunden sein. Bei Verbindungen mit mehr als einer Epoxygruppe kann die entsprechende höhermolekulare Verbindung auch Epoxygruppen in zwei oder mehr der beschriebenen Konfigurationen in Relation zur Polymerhauptkette aufweisen. So kann eine Verbindung mit mehr als einer Epoxygruppe beispielsweise eine endständige und eine seitenständige Epoxygruppe oder eine Epoxygruppe innerhalb des Polymerrückgrats und eine seitenständige Epoxygruppe aufweisen.

Zu den im Rahmen der vorliegenden Erfindung als Klebstoff A einsetzbaren Verbindungen mit mindestens einer Epoxygruppe zählen beispielsweise die cycloaliphatischen Epoxide. Beispiele für cycloaliphatische Epoxide sind Bis(3,4-epoxycyclohexylmethyl)oxalat, Bis(3,4-epoxycyclohexylmethyl)adipat, Bis(3,4-epoxy-6-methylcyclohexylmethyl)adipat und/oder Bis(3,4-epxoycyclo-hexylmethyl)pimelat.

Ebenso geeignet sind 3,4-Epoxycyclohexylmethyl-3,4-epoxycyclohexancarbo-xylate, beispielsweise 3,4-Epoxycyclohexylmethyl-3,4-epoxycyclohexancarbonsäure, 3,4-Epoxy-1-methylcyclohexylmethyl-3,4-epoxy-1-methylcyclohexancar-bonsäure, 6-Methyl-3,4-epoxycyclohexylmethyl-6-methyl-3,4-epoxycyclohexancarbonsäure, 3,4-Epoxy-2-methylcyclohexylmethyl-3,4-epoxy-2-methylcyclohe-xancarbonsäure, 3,4-Epoxy-5-methylcyclohexylmethyl-3,4-epoxy-5-methylcyclo-hexancarbonsäure, und dergleichen.

Weitere geeignete Epoxide, die sich im Rahmen der vorliegenden Erfindung einsetzen lassen umfassen Glycidylether wie sie beispielsweise aus mehrwertigen Phenolen erhältlich sind, beispielsweise Diglycidylether von 2,2'-Bis(2,3-epoxypropoxyphenol)propan.

Vorteilhafterweise können auch solche Verbindungen mit mindestens einer Epoxygruppe eingesetzt werden, wie sie handelsüblich verfügbar sind. Beispielsweise sind dies Octadecylenoxid, Epichlorhydrin, Styroloxid, Vinylcyclohexenoxid, Glycidol, Glycidylmethacrylat, Diglycidylether von Bisphenol- A (beispielsweise EPON 828, EPON 1004 und EPON 1010, Hersteller: Shell Chemical Co.; DER-331, DER-332 und DER-334, Hersteller: Dow Chemical Co.), Vinylcyclohexendioxid (z. B. ERL-4206, Hersteller: Union Carbide Corp.), 3,4-Epoxycyclohexylmethyl-3,4-epoxycyclohexencarboxylat (z. B. ERL-4221, Hersteller: Union Carbide Corp.), 3,4-Epoxy-6-methylcyclohexylmethyl-3,4-epoxy-6-methylcyclohexencarboxylat (z. B. ERL-4201, Hersteller: Union Carbide Corp.), Bis(3,4-epoxy-6-methylcyclohexylmethyl)adipat (z. B. ERL-4289, Hersteller: Union Carbide Corp.), Bis(2,3-epoxycyclopentyl)ether (z. B. ERL-0400, Hersteller: Union Carbide Corp.), aliphatisches, mit Polypropylenglycol modifiziertes Epoxyharz (z. B. ERL-4050 oder ERL-4052, Hersteller: Union Carbide Corp.), Dipentendioxid (z. B. ERL-4269, Hersteller: Union Carbide Corp.), epoxidiertes Polybutadien (z. B. OXIRON 2001, Hersteller: FMC Corp.), Siliconharz mit einem Gehalt an Epoxyfunktionalität, flammhemmende Epoxyharze (z. B. DER-580, Hersteller: Dow Chemical Co.), 1,4-Butandioldiglycidyläther von Phenolformaldehydnovolak (z. B. DEN-431 oder DEN-438, Hersteller: Dow Chemical Co.) sowie Resorcinoldiglycidyläther (z. B. KOPOXITE, Hersteller: Koppers Co., Inc.).

Ebenfalls als Verbindungen mit mindestens einer Epoxygruppe einsetzbar sind Epoxygruppen tragende Polymere, wie sie beispielsweise durch die Polymerisation von Epoxygruppen tragenden, ethylenisch ungesättigten Epoxyverbindungen erhältlich sind. Beispiele für solche Epoxygruppen tragenden, ethylenisch ungesättigten Verbindungen sind die Acrylsäureester von Glycidol, beispielsweise Glycidylacrylat oder Glycidylmethacrylat. Vorteilhafterweise werden diese Verbindungen mit mindestens einer weiteren, ethylenisch ungesättigten Verbindung, die keine Epoxygruppe trägt, copolymerisiert. Ebenfalls geeignet sind beispielsweise Epoxygruppen tragende Polyurethane. Solche Polyurethane sind beispielsweise durch Umsetzung von OH-Gruppen tragenden Polyestern oder Polyethern mit polyfunktionellen Isocyanaten erhältlich, wobei das stöchiometrische Verhältnis von Isocyanatgruppen zu OH-Gruppen so gewählt wird, daß das entsprechende Polyurethan wenigstens eine freie Isocyanatgruppe aufweist, die anschließend beispielsweise mit 1-Hydroxy-2,3-epoxypropan, oder einem anderen geeigneten Epoxid, umgesetzt wird.

Der Klebstoff A enthält in der Regel bis zu 100 Gew.-%, bevorzugt bis zu etwa 30 Gew.-% einer Verbindung mit nur einer Epoxygruppe. Der Anteil von Verbindungen mit zwei oder mehr Epoxygruppen beträgt bis zu etwa 100 Gew.-%, bevorzugt etwa 10 bis etwa 40 Gew.-%, wobei der Anteil an tri- und höherfunktioneller Epoxiden in dem Klebstoff A bis zu etwa 10 Gew.-% beträgt.

Neben der aliphatischen Epoxid-Verbindung enthält der Klebstoff A eine Verbindung mit mindestens zwei OH-Gruppen und einem Molekulargewicht von weniger als 400. Dabei beträgt der Anteil an trifunktioneller Verbindung, d.h., einer Verbindung mit drei OH-Gruppen, etwa 1 bis etwa 10 Gew.-%, bezogen auf den gesamten Klebstoff. Falls der Klebstoff A auch NCO-Gruppen enthält, empfiehlt es sich entweder keine Polyole zu verwenden oder sie erst unmittelbar vor der Anwendung hinzu zu mischen.

Geeignete OH-Gruppen tragende Verbindungen sind beispielsweise höherfunktionelle Alkohole wie Glycerin, Trimethyolpropan, Pentaerythrit und Zuckeralkohole, sowie oligomere Ether der einzelnen genannten Verbindungen oder oligomere Ether aus einem Gemisch aus zwei oder mehr der genannten Verbindungen untereinander. Weiterhin können die Umsetzungsprodukte niedermolekularer, polyfunktioneller Alkohole mit bis zu vier Kohlenstoffatomen aufweisenden Alkylenoxiden als Polyolkomponente zur Herstellung der Polyester eingesetzt werden. Geeignet sind beispielsweise Umsetzungsprodukte polyfunktioneller Alkohole, wie Glycerin, Trimethylolethan und/oder Trimethylolpropan, Pentaerythrit oder Zuckeralkohole mit den genannten Alkylenoxiden zu Oligoetherpolyolen mit einem Molekulargewicht von nicht mehr als etwa 400.

Als Polyol kann der erfindungsgemäße Klebstoff A eine Verbindung mit mindestens zwei OH-Gruppen und mit einem Molekulargewicht von mindestens 400 oder ein Gemisch aus zwei oder mehr solcher Verbindungen enthalten. Vorzugsweise weisen die als Polyole eingesetzten Verbindungen ein Molekulargewicht von mehr als etwa 400 bis etwa 10.000, besonders bevorzugt mehr als etwa 400 bis etwa 2.000 auf.

Geeignete Polyole sind beispielsweise Polyesterpolyole, Polyetherpolyole, Polyurethanpolyole, Polycarbonatpolyole, Polyvinylacetalpolyole, Polyacrylatpolyole, Polymethacrylatpolyole oder Copolyole aus geeigneten Acrylaten und Methacrylaten oder Gemische aus zwei oder mehr der genannten Polyole. Besonders bevorzugt ist im Rahmen der vorliegenden Erfindung der Einsatz von Polyesterpolyolen, Polyetherpolyolen oder Polyurethanpolyolen.

Bevorzugte Polyesterpolyole werden durch Umsetzung von niedermolekularen Alkoholen, insbesondere von Ethylenglycol, Diethylenglycol, Neopentpentylglycol, Hexandiol, Butandiol, Propylenglycol, Glycerin oder Trimethyolpropan durch Polykondensation mit einer Polycarbonsäure oder einem Gemisch solcher Säuren hergestellt. So können beispielsweise difunktionelle und/oder trifunktionelle Alkohole mit Dicarbonsäuren und/oder Tricarbonsäuren oder deren reaktiven Derivaten zu Polyestern kondensiert werden. Geeignete Dicarbonsäuren sind beispielsweise Bernsteinsäure und ihre höheren Homologen mit bis zu 16 C-Atomen, ferner ungesättigte Carbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Ebenfalls geeignet sind aliphatische Polycarbonsäuren, wie Adipinsäure, Glutaminsäure, Pimelinsäure, aromatische Säuren wie Naphthalindicarbonsäure, Cycloalkylsäuren, wie Cyclohexandicarbonsäure, oder Säuren mit einem Gehalt an Heteroatomen wie S oder N, beispielsweise Diglycolsäure, Ethylether-2,2-dicarbonsäure oder Thiodiglycolsäure.

Ebenfalls als Polyole zur Herstellung der Polyester geeignet sind aliphatische Alkohole mit zwei bis vier OH-Gruppen pro Molekül. Die OH-Gruppen sind vorzugsweise primär, können jedoch auch sekundär sein. Zu den geeigneten aliphatischen Alkoholen zählen beispielsweise Ethylenglycol, Propylenglycol, Butandiol-1,4, Pentandiol-1,5, Hexandiol-1,6, Heptandiol-1,7, Octandiol-1,8 und deren höhere Homologen und Isomeren, wie sie sich für den Fachmann aus einer schrittweisen Verlängerung der Kohlenwasserstoffkette um jeweils eine $CH_2$-Gruppe oder unter Einführung von Verzweigungen in die Kohlenstoffkette ergeben. Ebenfalls geeignet sind höherfunktionelle Alkohole, beispielsweise Glycerin, Trimethyolpropan, Pentaerythrit sowie oligomere Ether der genannten Substanzen mit sich selbst oder im Gemisch aus zwei oder mehr der genannten Ether untereinander.

Weiterhin können die Umsetzungsprodukte niedermolekularer, polyfunktioneller Alkohole mit bis zu vier Kohlenstoffatomen aufweisenden Alkylenoxiden als Polyolkomponente zur Herstellung der Polyester eingesetzt werden. Geeignet sind beispielsweise Umsetzungsprodukte von Ethylenglycol, Propylenglycol, den isomeren Butandiolen oder Hexandiolen mit Ethylenoxid, Propylenoxid und/oder Butylenoxid. Femer sind auch die Umsetzungsprodukte polyfunktioneller Alkohole, wie Glycerin, Trimethylolethan und/oder Trimethylolpropan, Pentaerythrit oder Zuckeralkohole mit den genannten Alkylenoxiden zu Polyetherpolyolen geeignet. Weiterhin können die Umsetzungsprodukte niedermolekularer, polyfunktioneller Alkohole mit bis zu vier Kohlenstoffatomen aufweisenden Alkylenoxiden als Polyolkomponente zur Herstellung der Polyester eingesetzt werden. Geeignet sind beispielsweise Umsetzungsprodukte von Ethylenglycol, Propylenglycol, den isomeren Butandiolen oder Hexandiolen mit Ethylenoxid, Propylenoxid und/oder Butylenoxid. Ferner sind auch die Umsetzungsprodukte polyfunktioneller Alkohole, wie Glycerin, Trimethylolethan und/oder Trimethylolpropan, Pentaerythrit oder Zuckeralkohole mit den genannten Alkylenoxiden zu Polyetherpolyolen geeignet.

Besonders geeignet als Polyole zur Herstellung der Polyester sind Polyetherpolyole mit einem Molekulargewicht von etwa 100 bis 5.000, vorzugsweise von etwa 200 bis etwa 3000. Ganz besonders bevorzugt ist im Rahmen der vorliegenden Erfindung Propylenglycol mit einem Molekulargewicht von etwa 300 bis etwa 2.500. Ebenfalls geeignet sind Polyetherpolyole wie sie beispielsweise durch die Polymerisation von Tetrahydrofuran entstehen.

Eine bevorzugt im Rahmen der vorliegenden Erfindung als Polyole eingesetzte Gruppe von Polymeren sind die Polyurethanpolyole. Unter Polyurethanpolyolen werden im Rahmen der vorliegenden Erfindung Verbindungen verstanden, die durch Polyaddition aus zwei- und/oder höherwertigen Alkoholen und Polyisocyanaten zugänglich sind. Als Polyole zur Herstellung der Polyurethane werden typischerweise Polyester und/oder Polyether mit einem Molekulargewicht von etwa 300 bis 10.000, vorzugsweise etwa 800 bis etwa 5.000 und mit mindestens zwei Hydroxygruppen ausgewählt. Als Polyester zur Herstellung der im Rahmen der vorliegenden Erfindung einsetzbaren Polyurethane sind alle OH-Gruppen terminierten Polyester geeignet, die sich mit einem mindestens difunktionellen Isocyanat unter Kettenverlängerung umsetzen lassen. Hierzu zählen beispielsweise die oben genannten Polyester.

Weitere Dihydroxyverbindungen die für die Darstellung der als Polyolkomponente zur Herstellung der Polyurethane einsetzbaren Polyester verwendbar sind, sind beispielsweise Butandiol-1,3, Butandiol-1,4, Butandiol-2,3, 2,2-Diethylpropan-1,3-diol, 2-Methyl-2-propylpropan-1,3-diol, isomere Octandiole, ethylenisch ungesättigte, zweiwertige Verbindungen wie Heptendiol, Octendiol sowie zweiwertige Verbindungen mit einem Gehalt an N oder S Heteroatomen, beispielsweise Diethylenglycol, Triethylenglycol, Thioethylenglycol, Diethanolamin oder N-Methyldiethanolamin oder Gemische aus zwei oder mehr davon.

Die Diole werden in der Regel zur Herstellung der Polyurethane mit entsprechenden, mindestens difunktionellen Isocyanaten umgesetzt. Die im Rahmen der vorliegenden Erfindung eingesetzten Isocyanate können aliphatisch oder aromatisch sein und etwa 4 bis etwa 40 Kohlenstoffatome aufweisen. Beispiele für geeignete Isocyanate sind Hexamethylendiisocyanat (HDI), 1,8-Octandiisocyanat, 1,10-Decandiisocyanat, Diisocyanate wie sie beispielsweise aus der Dimerisierung von Fettsäuren und entsprechender anschließender Funktionalisierung erhältlich sind, Phenylendiisocyanat-1,4, Tetramethylxylylendiisocyanat (TMXDI), 2,4- und 2,6-Toluoldiisocyanat und deren Gemische, 1,5-Naphthylendiisocyanat, 2,4'- oder 4,4'-Diphenylmethandiisocyanat (MDI) und deren Gemische, Isophorondiisocyanat (IPDI), Cyclobutan-1,3-diisocyanat, Cyclohexan-1,3- und -1,4-diisocyanat, 2,4- und 2,6-Hexahydrotoluylendiisocyanat, Hexahydro-1,3- oder -1,4-Phenylendiiso-cyanat, 2,2'-Diphenylmethan-diisocyanat oder 4,4'-Diphenylmethandiisocyanat oder Gemische aus zwei oder mehr der genannten Diisocyanate. Ebenso im Sinne der vorliegenden Erfindung als Isocyanat zur Herstellung des im Klebstoff A enthaltenen Polyurethans einsetzbar sind drei- oder höherwertige Polyisocyanate, wie sie beispielsweise durch Oligomerisierung von Diisocyanaten erhältlich sind. Beispiele für solche drei- und höherwertigen Polyisocyanate sind die Triisocyanurate von HDI oder IPDI oder deren gemischte Triisocyanurate.

In der Regel wird es so sein, daß das durchschnittliche Molekulargewicht des als Polyol eingesetzten Polymeren einen Wert von 400 nicht unterschreiten sollte. Da Polymere in der Regel, in Abhängigkeit von der gewählten Synthesemethode eine statistische Molekulargewichtsverteilung aufweisen, bezieht sich der Begriff "durchschnittliches Molekulargewicht" auf das Zahlenmittel ($M_n$) des Molekulargewichts der in dem Klebstoff A enthaltenen Polymeren. Dies schließt mit ein, daß auch einzelne polymere Moleküle enthalten sein können, deren Molekulargewicht unterhalb des angegebenen Wertes von 400 liegt.

Zusätzlich zu den genannten Epoxid-Verbindungen kann der erfindungsgemäß zu verwendende Klebstoff A noch eine oder mehrere weitere Komponenten enthalten, die eine kationisch polymerisierbare funktionelle Gruppe aufweisen, die keine Epoxygruppe ist. Beispiele hierfür sind Olefine, Vinylether, Vinylarene, insbesondere Styrol, und heterocyclische Verbindungen wie Ether, Thioether, Ester oder Acetale. Bevorzugt sind im Rahmen der vorliegenden Erfindung Vinylether, wie sie beispielsweise formell aus der Veretherung von Alkoholen, vorzugsweise Polyolen, und Vinylethern erhältlich sind (tatsächlich wird bei der technischen Herstellung der Vinylether im allgemeinen von Acetylen ausgegangen), und Vinylstyrol.

Besonders bevorzugt ist im Rahmen der vorliegenden Erfindung der Einsatz von Vinylethern. Als niedermolekulare Vinylether mit Molekulargewichten von bis zu etwa 400 können beispielsweise monofunktionelle oder difunktionelle Vinylether eingesetzt werden. Beispielsweise sind dies Hydroxybutylvinylether, Triethylenglycoldivinylether, Cyclohexandimethanoldivinylether, Propylencarbonatpropenylether, Dodecylvinylether, Cyclohexandimethanolmonovinylether, Cyclohexylvinylether, Diethylenglycoldivinylether, 2-Ethylhexylvinylether, Dipropylenglycoldivinyl-ether, Tripropylenglycoldivinylether, Hexandioldivinylether, Octadecylvinylether oder Butandioldivinylether, welche eine bevorzugte Verbindung ist. Es ist ebenfalls möglich, Divinylether höherfunktioneller Alkohole einzusetzen. Beispielsweise sind dies Glycerinmonovinylether, Glycerindivinylether, Glycerintrivinylether, Trimethyolpropanmono-, di- oder -trivinylether, Pentaerythritmono-, di-, tri- oder tetravinylether oder Vinylether von Alkoholen mit mehr als vier OH-Gruppen beispielsweise Vinylether von Zuckeralkoholen. Die genannten Verbindungen können sowohl einzeln als auch im Gemisch aus zwei oder mehr der genannten Vinylether eingesetzt werden.

Wenn als Komponente, die zusätzlich kationisch reagiert, eine höhermolekulare Verbindung mit Molekulargewichten von etwa 400 bis etwa 10 000 eingesetzt wird, so handelt es sich hierbei vorzugsweise um ein Polymeres, das als Endgruppen oder ggf. seitenständig zur Polymerhauptkette eine kationisch polymerisierbare Gruppe trägt, die keine Epoxygruppe ist. Solche Verbindungen, wie sie vorzugsweise einzeln oder als Gemisch im Rahmen des erfindungsgemäß zu verwendenden Klebstoffs eingesetzt werden, lassen sich beispielsweise ausgehend von den höhermolekularen Polyolkomponenten, wie sie bereits oben beschrieben wurden, herstellen. So ist es beispielsweise möglich, ein Vinylstyrol-terminiertes Polymeres dadurch herzustellen, daß ein OH-terminiertes Polymeres mit 4-Styrolisocyanat umgesetzt wird. Als OH-terminiertes Polymeres wird vorzugsweise ein Polyesterpolyol oder Polyetherpolyol oder ein Polyurethan eingesetzt. Es ist ebenfalls möglich, eine breite Variation an vinylethergruppenhaltigen Polymeren darzustellen. Hierzu wird beispielsweise ein OH-gruppenhaltiges Polymeres mit einem mindestens zweifachen Überschuß an Diisocyanaten (bezogen auf OH-Gruppen) umgesetzt. Das so hergestellte, über freie NCO-Gruppen verfügende Polymere wird im Anschluß mit Hydroxyvinylethern umgesetzt. Es ist ebenfalls möglich, vinyletherhaltige Polymere dadurch herzustellen, daß zunächst ein OHgruppenhaltiger Vinylether mit einer äquimolaren Menge eines Diisocyanats umgesetzt wird und man das Reaktionsprodukt im Anschluß mit einem OHgruppenterminierten Polymeren umsetzt. Als OH-gruppenhaltige Vinylether sind im Rahmen der vorliegenden Erfindung Hydroxybutylvinylether, Hydroxyhexylvinylether und Cyclohexandimethanolmonovinylether bevorzugt.

Der erfindungsgemäß zu verwendende Klebstoff A enthält die Komponente, die kationisch reagiert ohne eine Epoxy-Gruppe zu haben, in einer Menge von bis zu 20 Gew.-%, vorzugsweise in einer Menge von 0,1 bis zu etwa 10 Gew.-%, insbesondere etwa 1 bis etwa 8 Gew.-%, bezogen auf den gesamten Klebstoff A.

Als Photoinitiator enthält der erfindungsgemäß zu verwendende Klebstoff A einen Photoinitiator, oder ein Gemisch aus zwei oder mehr Photoinitiatoren, die dazu in der Lage sind, strahlungsinduziert die Polymerisation der Epoxygruppen und möglichst auch der Acrylat-Gruppen zu initiieren. Insbesondere sind hierzu Photoinitiatoren geeignet, die unter Einwirkung von elektromagnetischer Strahlung, insbesondere unter Lichteinwirkung, Lewis- oder Brönstedt-Säuren erzeugen.

Als Photoinitiatoren, die unter Lichteinwirkung Lewis-Säuren und/oder Brönsted-Säuren erzeugen, werden im Rahmen der vorliegenden Erfindung vorzugsweise komplexe Oniumverbindungen verwendet. Grundsätzlich sind alle photosensitiven aromatischen Sulfonium- oder Iodoniumsalze zur lichtinduzierten Initiierung der Polymerisation geeignet. Besonders geeignet sind hierbei die Trisarylsulfoniumhexafluoroantimonate, die Trisarylsulfoniumhexafluorophosphate, wie sie beispielsweise in den Handelsprodukten Cyracure® UVI-6974 und UVI-6990 (Hersteller: UCC, Danbury, UK) enthalten sind, oder das Bis(4,4'-Dimethylbenzyl)jodoniumtetra(pentafluorophenyl)borat (UV CATA 200, Hersteller: Rhone-Poulenc, Saint-Fons, FR).

Der in Rahmen der vorliegenden Erfindung eingesetzte Photoinitiator ist dazu in der Lage, nach Bestrahlung mit Licht einer Wellenlänge von etwa 100 bis etwa 600 nm eine radikalische oder kationische Polymerisation zu initiieren. In einer bevorzugten Ausführungsform erfolgt die Initiierung bei Bestrahlung mit Licht einer Wellenlänge von etwa 150 bis etwa 500 nm, beispielsweise bei etwa 200 bis etwa 480 nm.

Als ein Photoinitiator, insbesondere für die radikalische Reaktion werden Stoffe und Stoffgemische eingesetzt, die bei Bestrahlung mit Licht mit einer Wellenlänge von etwa 260 bis etwa 480 nm dazu in der Lage ist, eine radikalische Polymerisation olefinisch ungesättigter Doppelbindungen zu initiieren. Im Rahmen der vorliegenden Erfindung sind grundsätzlich alle handelsüblichen Photoinitiatoren geeignet, die mit dem erfindungsgemäßen Klebstoff kompatibel sind, d. h. wenigstens weitgehend homogene Gemische ergeben.

Beispielsweise sind dies alle Norrish-Type I fragmentierenden Substanzen. Beispiele hierfür sind Benzophenon, Campherchinon, Quantacure (Hersteller: International Bio-Synthetics), Kayacure MBP (Hersteller Nippon Kayaku), Esacure BO (Hersteller: Fratelli Lamberti), Trigonal 14 (hersteller: Akzo), Photoinitiatoren der Irgacure®-, Darocure®- oder Speedcure®-Reihe (Hersteller: Ciba-Geigy), Darocure® 1173 und/oder Fi-4 (Hersteller: Eastman) Insbesondere geeignet sind darunter Irgacure® 651, Irgacure® 369, Irgacure® 184, Irgacure® 907, Irgacure® 1850, Irgacure® 1173 (Darocure® 1173), Irgacure® 1116, Speedcure® EDB, Speedcure® ITX, Irgacure® 784 oder Irgacure® 2959 oder Gemische aus zwei oder mehr davon.

Bevorzugt sind Photoinitiatoren aus folgender Gruppe: Benzoin und dessen Derivate sowie Phenylhydroxyalkanon-Typen und Thioxanthon-Typen.

Im Rahmen einer bevorzugten Ausführungsform wird wenigstens anteilig ein Photoinitiator verwendet, der ein Molekulargewicht von mehr als etwa 200 aufweist.

Kommerziell erhältliche Photoinitiatoren, die diese Bedingung erfüllen sind beispielsweise Irgacure® 651, Irgacure® 369, Irgacure® 907, Irgacure® 784, Speedcure® EDB, oder Speedcure® ITX.

Photoinitiatoren die bezüglich ihres Molekulargewichts die oben genannte Bedingung erfüllen, sind jedoch auch durch Umsetzung eines niedermolekularen Photoinitiators der eine gegenüber Isocyanaten reaktive funktionelle Gruppe aufweist, beispielsweise eine Aminogruppe oder eine OH-Gruppe, mit einer hochmolekularen Verbindung mit wenigstens einer Isocyanatgruppe erhältlich (polymergebundene Photoinitiatoren). Vorzugsweise werden als Photoinitiator Verbindungen eingesetzt, die mehr als ein Photoinitiatormolekül tragen, beispielsweise zwei, drei oder mehr Photoinitiatormoleküle. Solche Verbindungen lassen sich beispielsweise durch Umsetzung eines polyfunktionellen Alkohols mit zwei oder mehr OH-Gruppen mit geeigneten Di- oder Triisocyanaten und Photoinitiatoren mit einer geeigneten, gegenüber Isocyanaten reaktiven funktionellen Gruppe, erhalten.

Als polyfunktionelle Alkohole sind alle vorstehend genannten polyfunktionellen Alkohole einsetzbar, insbesondere jedoch Neopentylglykol, Glycerin, Trimethylolpropan, Pentaerythrit und deren Alkoxylierungsprodukte mit $C_{2-4}$-Alkylenoxiden. Ebenfalls als polyfunktionelle Alkohole geeignet, und im Rahmen der vorliegenden Erfindung besonders bevorzugt, sind die Umsetzungsprodukte dreiwertiger Alkohole mit Caprolacton, beispielsweise das Umsetzungsprodukt von Trimethylolpropan mit Caprolacton (Capa 305, Fa. Interox, Cheshire, UK, Molekulargewicht ($M_n$) = 540).

In einer bevorzugten Ausführungsform der Erfindung wird ein Photoinitiator verwendet, der erhältlich ist, indem ein mindestens dreiwertiger Alkohol mit Caprolacton zu einem mindestens drei OH-Gruppen tragenden Polycaprolacton mit einem Molekulargewicht von etwa 300 bis etwa 900 umgesetzt wird, und anschließend das Polycaprolacton mittels einer mindestens zwei Isocyanatgruppen tragenden Verbindung mit 1-[4-(2-Hydroxyethoxy)phenyl]-2-hydroxy-2-methylpropan-1-on verknüpft wird.

Als mindestens zwei Isocyanatgruppen tragende Verbindungen, insbesondere als Diisocyanate zur Umsetzung mit den genannten Polyolen kommen beispielsweise alle im Rahmen dieses Textes genannten Diisocyanate in Frage. Besonders bevorzugt sind jedoch das 2,4- und das 2,6-Isomere des Toluylendiisocyanats, wobei die Isomeren in ihrer reinen Form oder als Gemisch eingesetzt werden können.

Als Photoinitiatoren zur Herstellung der polymergebundenen Photoinitiatoren eignen sich alle Photoinitiatoren, die eine gegenüber Isocyanatgruppen reaktive funktionelle Gruppe aufweisen. Besonders bevorzugt ist im Rahmen der vorliegenden Erfindung 1-[4-(2-Hydroxyethoxy)phenyl]-2-hydroxy-2-methylpropan-1-on (Irgacure® 2959), das über eine primär gebundene OH-Gruppe verfügt.

Gegebenenfalls können die Photoinitiatoren auch hergestellt werden, indem eine untergeordnete Menge an gegenüber Isocyanatgruppen reaktiven Photoinitiatormolekülen bei der Herstellung des Klebstoffs A mit eingesetzt werden. Dies führt zu einer Anbindung des Photoinitiators an ein Molekül des Klebstoffs A.

Es ist weiterhin möglich, die Anbindung des Photoinitiators an eine Polymerkette des Klebstoffs A, dadurch zu erreichen, daß der über eine entsprechende funktionelle Gruppe verfügende Photoinitiator in monomerer Form dem Klebstoff zugegeben wird, und anschließend, etwa während einer Lagerzeit des Klebstoffs, mit einer entsprechenden polymeren Komponente des Klebstoffs A reagiert.

Außerdem ist es möglich, den Photoinitiator mit einer durch Bestrahlung mit UV-Licht oder mit Elektronenstrahlen polymerisierbaren funktionellen Gruppe zu versehen, wobei die mit UV-Licht oder mit Elektronenstrahlen polymerisierbare funktionelle Gruppe beispielsweise über eine Umsetzung des Photoinitiators mit einer ungesättigten Carbonsäure mit dem Photoinitiator verbunden werden kann. Als ungesättigte Carbonsäure eignen sich beispielsweise Acrylsäure oder Methacrylsäure. Besonders geeignet sind im Rahmen der vorliegenden Erfindung die Umsetzungsprodukte von Irgacure® 2959 mit Acrylsäure oder Methacrylsäure.

Es ist demnach möglich, daß als Photoinitiator eine Verbindung eingesetzt wird, die sowohl einen Photoinitiator als auch eine durch Bestrahlung mit UV-Licht oder mit Elektronenstrahlen polymerisierbare funktionelle Gruppe aufweist.

Der erfindungsgemäß verwendete Klebstoff A enthält den Photoinitiator in einer Menge von bis zu etwa 25 Gew.-% bezogen auf den gesamten Klebstoff A, die Untergrenze sollte bei etwa 0,01 Gew.-% liegen. Bezogen auf das einzelne Photoinitiatormolekül selbst, unabhängig davon, ob es an eine weitere Verbindung kovalent gebunden ist, sollte der Anteil am Klebstoff bei mindestens etwa 0,01 Gew.-% bis zu etwa 10 Gew.-% liegen, bevorzugt ist ein Anteil von etwa 0,5 bis etwa 5 Gew.-% und besonders bevorzugt etwa 1 bis etwa 3 Gew.-%, bezogen auf den gesamten Klebstoff A.

Ferner können auch Co-Initiatoren oder Photosensibilisatoren eingesetzt werden, z.B. Acetophenon, Benzophenon und Fluoreszin und deren Derivate.

In einer bevorzugten Ausführungsform kann der erfindungsgemäß verwendete Klebstoff A als monofunktionellen Reaktiwerdünner noch mindestens eine Verbindung aufweisen, die nur über eine durch Bestrahlung mit UV-Licht oder mit Elektronenstrahlen polymerisierbare funktionelle Gruppe verfügt. Hierzu eignen sich besonders solche Verbindungen, die bei Raumtemperatur fließfähig sind, insbesondere entsprechende Ester der Acrylsäure oder Methacrylsäure. Besonders geeignete Verbindungen sind beispielsweise die Acrylsäure- oder Methacrylsäureester der aromatischen oder aliphatischen, linearen oder verzweigten $C_{4-20}$-Monoalkohole oder von entsprechenden Etheralkoholen, beispielsweise n-Butylacrylat, 2-Ethylhexylacrylat, 3-Methoxybutylacrylat, 2-Phenoxyethylacrylat, Benzylacrylat oder 2-Methoxypropylacrylat.

Die monofunktionellen Reaktiwerdünner stellen im Klebstoff A einen Anteil von bis zu etwa 50 Gew.-%, vorzugsweise jedoch darunter, beispielsweise etwa 40 Gew.-%, 30 Gew.-% oder etwa 20 Gew.-%. Die Verwendung geringerer Mengen ist ebenso möglich, so kann der Klebstoff A auch nur 10 Gew.-% oder eine Menge von etwa 0,5 bis etwa 8 Gew.-% an monofunktionellem Reaktiwerdünner enthalten.

Der Klebstoff A kann nach Abschluß einer ersten Aushärtungsstufe durch Bestrahlung mit beispielsweise Elektronenstrahlen oder UV-Strahlen (in Verbindung mit einem entsprechenden Photoinitiator) durch den Einfluß von Luftfeuchtigkeit bis zur geforderten Endfestigkeit aushärten. Wenn jedoch ein schnelles Erreichen einer bestimmten Endfestigkeit, d.h., eine hohe Härtungsgeschwindigkeit gefordert ist, beispielsweise um eine möglichst zügige Weiterverarbeitung der verklebten Materialien zu ermöglichen, kann die auf Härtung durch Luftfeuchtigkeit beruhende Härtungsgeschwindigkeit zu gering sein. In solchen Fällen kann dem Klebstoff vor der Verarbeitung ein Härter zugesetzt werden.

Erfindungsgemäß kann daher auch ein Klebstoff A verwendet werden, der als Härter eine Verbindung mit mindestens zwei aciden Wasserstoffatomen enthält.

Als Härter wird vorzugsweise eine Verbindung mit mindestens zwei funktionellen Gruppen mit jeweils mindestens einem aciden Wasserstoffatom, oder ein Gemisch aus zwei oder mehr solcher Verbindungen, eingesetzt, die mit den entsprechenden funktionellen Gruppen des Klebstoffs A reagieren können. Unter den entsprechenden funktionellen Gruppen des Klebstoffs A werden im Rahmen des vorliegenden Textes alle im Klebstoff A vorliegenden funktionellen Gruppen verstanden, die unter den erfindungsgemäßen Bedingungen nicht durch Bestrahlung polymerisierbar sind, insbesondere Isocyanatgruppen.

Die als Härter einsetzbaren Verbindungen weisen vorzugsweise ein Molekulargewicht von bis zu 2.500 auf. Als mit den entsprechenden funktionellen Gruppen des Klebstoffs A reaktionsfähige funktionellen Gruppen mit mindestens einem aciden Wasserstoffatom eignen sich insbesondere primäre oder sekundäre Aminogruppen, Mercaptogruppen oder OH-Gruppen. Die als Härter einsetzbaren Verbindungen können Aminogruppen, Mercaptogruppen oder OH-Gruppen jeweils ausschließlich oder im Gemisch aufweisen.

Die Funktionalität der als Härter einsetzbaren Verbindungen beträgt in der Regel mindestens etwa zwei. Vorzugsweise weist der Härter einen Anteil an höherfunktionellen Verbindungen, beispielsweise mit einer Funktionalität von drei, vier oder mehr, auf. Die gesamte (durchschnittliche) Funktionalität des Härters beträgt beispielsweise etwa zwei (z.B. wenn nur difunktionelle Verbindungen als Härter eingesetzt werden), oder mehr, beispielsweise etwa 2,1, 2,2, 2,5, 2,7, oder 3. Gegebenenfalls kann der Härter eine noch höhere Funktionalität aufweisen, beispielsweise etwa vier oder mehr.

Vorzugsweise enthält der Härter ein mindestens zwei OH-Gruppen tragendes Polyol. Zum Einsatz als Härter sind alle im Rahmen des vorliegenden Textes erwähnten Polyole geeignet, sofern sie das einschränkende Kriterium der Obergrenze des Molekulargewichts erfüllen.

Der Härter wird in der Regel in einer solchen Menge eingesetzt, daß das Verhältnis von den mit dem Härter reaktionsfähigen funktionellen Gruppen des Klebstoffs A zu mit entsprechenden funktionellen Gruppen des Klebstoffs A reaktionsfähigen Gruppen des Härters etwa 5:1 bis etwa 1:1, insbesondere etwa 2:1 bis etwa 1:1 beträgt.

Vorzugsweise ist im erfindungsgemäß verwendeten Klebstoff als Härter eine mindestens zwei OH-Gruppen aufweisende Verbindung enthalten.

Gegebenenfalls kann der Klebstoff A noch Zusatzstoffe enthalten, die am gesamten Klebstoff einen Anteil von bis zu etwa 49 Gew.-% haben können. Zu den im Rahmen der vorliegenden Erfindung einsetzbaren Zusatzstoffen zählen beispielsweise Weichmacher, Stabilisatoren, Antioxidantien, Farbstoffe oder Füllstoffe.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat. Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu im Rahmen der Erfindung als Zusatzstoffe einsetzbaren Stabilisatoren oder Antioxidantien, zählen Phenole, sterisch gehinderte Phenole hohen Molekulargewichts ($M_n$), polyfunktionelle Phenole, schwefel- und phosphorhaltige Phenole oder Amine. Im Rahmen der Erfindung als Zusatzstoffe einsetzbare Phenole sind beispielsweise Hydrochinon, Hydrochinonmethylether 2,3-(Di-tert.-butyl)hydrochinon, 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octylthio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tertbutyl-4-hydroxyphenyl)propionat]; sowie p-Hydroxydiphenylamin oder N,N'diphenylendiamin oder Phenothiazin.

Weitere Zusatzstoffe können in den Klebstoff A mit aufgenommen werden, um bestimmte Eigenschaften zu variieren. Darunter können beispielsweise Farbstoffe wie Titandioxid, Füllstoffe wie Talcum, Ton und dergleichen sein. Gegebenenfalls können in den erfindungsgemäßen Klebstoffen geringe Mengen an thermoplastischen Polymeren vorliegen, beispielsweise Ethylenvinylacetat (EVA), Ethylenacrylsäure, Ethylenmethacrylat und Ethylen-n-butylacrylatcopolymere, die dem Klebstoff gegebenfalls zusätzliche Flexibilität, Zähigkeit und Stärke verleihen. Es ist ebenfalls möglich bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche beispielsweise die Benetzbarkeit der Klebstoffe erhöhen.

Der Klebstoff B kann alle für diesen Zweck bekannten Klebstoffe umfassen. Er ist vorzugsweise ein Schmelzklebstoff oder ein Dispersionsklebstoff. Wenn der Klebstoff B ein Schmelzklebstoff ist, enthält er

a) ein hochpolymeres Basisharz aus einem Polyamid, Polyurethan und insbesondere aus einem Copolymeren von ethylenisch ungesättigten Monomeren, vorzugsweise Ethylen mit Vinylacetat, Acrylsäure und/oder Methacrylsäure oder $C_1$-$C_4$-Estern der Acrylsäure und/oder Methacrylsäure gegebenenfalls in Kombination mit

b) die Klebkraft und Adhäsion steigernden Harzen auf Basis von natürlichen oder veresterten, dimerisierten oder polymerisierten Kolophoniumharzen, Polyterpenharzen, Phenol-Styrol-Harzen, aliphatischen und/oder aromatischen Kohlenwasserstoffharzen und/oder

c) mit Wachsen und Weichmachern.

Bevorzugt wird ein derartiger Schmelzklebstoff auf Basis von Ethylen-Vinylacetat-Copolymeren eingesetzt.

Alternativ kann als Klebstoff B auch ein Dispersions-Klebstoff eingesetzt werden. basierend beispielsweise auf homopolymeren oder copolymeren Polyvinylacetat-Dispersionen, Acrylat-Dispersionen, Polyvinyliden-Dispersionen, Butadien-Styrol-Dispersionen, Polyurethan-Dispersionen, Polychloropren-Dispersionen sowie Kautschuk-Dispersionen. Bevorzugt ist es, als einen derartigen hochviskosen Dispersionsklebstoff einen Klebstoff auf Basis von homopolymeren, mit Weichmacher modifzierten Polyvinylacetat-Dispersion einzusetzen.

Der Klebstoff A kann

a) zu 0 bis 100 Gew.-% aus der radikalisch reagierenden Komponente,

b) zu 0 bis 100 Gew.-% aus der kationisch reagierenden Komponente,

c) zu 0 bis 90 Gew.-% aus der Komponente mit NCO-Gruppen

bestehen, d.h., alle drei Komponenten können allein (außer der Komponente c) oder in Kombination verwendet werden, also in den Kombinationen a + b, a + c, b + c und a + b + c. Alle diese Möglichkeiten werden im two-shot-Verfahren zusammen mit dem Klebstoff B eingesetzt.

Gegenstand der vorliegenden Erfindung ist ein Verfahren zur Klebbindung von Broschuren, Büchern, Katalogen, Schreibblocks und ähnlichen Druckartikeln nach einem mehrstufigen Klebebindungsverfahren, bei dem der Buchblock zunächst mit einem niedrigviskosen vernetzbaren Klebtoff A mit einer Film-Dicke von weniger als 0,2 mm beschichtet wird und bei dem dann der Film abbindet und bei dem gegebenenfalls schließlich der Klebstoff B aufgetragen wird, wobei der Polymerfilm A weiterhin wenigstens einen Photoinitiator enthält.

Das erfindungsgemäße Verfahren erfolgt in der Art, daß während oder nach dem Auftrag des Klebstoffs A auf der Blattkante eine Behandlung mit einer elektromagnetischen Strahlung mit Wellenlängen von <600 nm, vorzugsweise einer UV-Strahlung mit Wellenlängen von etwa 400 nm bis 250 nm oder einer Röntgen-, Elektronen- oder Gammastrahlung erfolgt. Im übrigen ist das Bindungsverfahren praktisch unverändert.

Das beanspruchte Klebeverfahren zeigt nicht nur Vorteile bezüglich einer einfachen und sicheren Bindung von Druckartikeln ohne bedeutende maschinelle Änderungen. Es werden auch Druckartikel erhalten, die bei der Wiederaufbereitung weniger problematisch sind. Bisher wurden die Klebstoffe bei der Wiederaufbereitung zu Altpapier so fein zerkleinert, daß sie auch durch Sieben nicht entfernt werden. Diese klebrigen, meistens thermoplastischen Verunreinigungen führen dann bei der Papierherstellung häufig zum Riß der noch feuchten Papierbahnen am Trockenzylinder. Bei den erfindungsgemäß hergestellten Durckartikeln läßt sich der Klebstoff leicht durch Sieben entfernen, da der Klebstoff-Film eine Festigkeit von mehr als 5 N/mm$^2$ hat.

**Beispiele**

**I. Klebstoffe**

Klebstoff A: Eine UV-initierbare, kationisch härtende, lösungsmittelfreie Epoxidmasse auf der Basis eines cycloaliphatischen Epoxidharzes sowie einem Sulfoniumsalz als Photoinitiator und Polyolen, nämlich einem Polyestertriol und einem Polyurethan-diol aus MDI, Polyether-diol und Polyesterdiol.
Klebstoff B: Ein Schmelzklebstoff auf der Basis von EVA, nämlich 30 % EVA, 40 % Naturharz-Ester und 30 % Mikrowachs.

**II. Durchführung**

Klebstoff A wurde bei 70 °C auf ungeritzte Buchblocks (80 g/m$^2$ Papier) in einer Schichtdicke zwischen 0,3 und 0,7 mm aufgetragen. Sofort im Anschluß daran wurde der Film unter einer UV-Lampe ca. 5 min belichtet und dann ca. 10 min bei 70 °C getempert (one-shot-Verfahren). Nach 24 h Lagerung bei RT wurden die Bücher einem Pull- und Flex-Test unterzogen.
Andere Bücher wurden mit dem Klebstoff B bei einer Auftragstemperatur von 170 °C abgeleimt (two-shot-Verfahren) und anschließend getestet.

**III. Ergebnis**

1. Pull- und Flex-Werte

| | Pull-Wert in N/cm | Flex-Wert in WG |
|---|---|---|
| KlebstoffA (24 h Lagerung) | 11,1 | 1850 |
| Klebstoff A + Klebstoff B | 14,8 | 2000 |

**IV. Meßmethoden**

**1. Pullwert:**

Aus einem flach aufgeschlagenen Buch (180 °C) wird jeweils die vorgesehene Seite durch den Öffnungsschlitz eines Martini Pulltesters geführt und das Exemplar mit den vorhandenen Klammern mittig festgeklemmt. Anschließend wird die Seite in der vorgesehenen Klemmbacke straff eingespannt. Das Gerät wird eingeschaltet und mit der Vorschubtaste in Betrieb genommen. Nun wird mit steigender Gewichtsbelastung an der Seite gezogen, bis sie sich aus der Bindung löst. Der gemessene Wert wird abgelesen und zur Seitenhöhe in Relation gebracht. Anschließend wird das Exemplar entnommen und die Apparatur mit der Rücktaste wieder in die Ausgangsstellung gebracht.
Üblicherweise werden je nach Exemplarstärke 3 bis 5 Werte pro Buch verteilt über die Gesamtseitenzahl ermittelt. Auf diese Weise lassen sich leicht Unterschiede zwischen Anfang, Mitte und Ende erkennen. Sind in einem Exemplar zwei oder mehrere Papierqualitäten enthalten, wird die Methode entsprechend angepaßt.

| Einstufung der Pullwerte: | |
|---|---|
| > 10 N/cm | ausgezeichnet |
| 8 - 10 N/cm | sehr gut |
| 5 - 7 N/cm | gut |
| 3 - 4 N/cm | befriedigend |
| < - 2 N/cm | schwach |

**2. Flex-Wert:**

Das Buch-Exemplar wird auf 240 °C aufgeschlagen und mittels der Federklemmen eines Flextesters auf dem Auflagetisch fixiert. Das Prüfblatt muß genau über dem Grat des Auflagetisches liegen und exakt senkrecht eingespannt werden. Dadurch können benachbarte Blätter das zu prüfende Blatt nicht abstützen. Mit einer Anfangsbelastung von 200 g/Seite werden 500 Wendungen durchgeführt und von einem Zählwerk festgehalten. Nach jedem Wechselzyklus wird das Gewicht um 200 g erhöht, bis zuletzt 2000g/Seite erreicht sind. Mit dieser Belastung wird der letzte Wechselzyklus durchgeführt. Danach sind definitionsgemäß 2000 WG erreicht. Dieser Test dauert 45 min und ergibt eine Gesamtwechselzahl von 500 x 10 = 5 000 mit einer von 200 g auf 2000 g steigenden Gewichtsbelastung.

Der gemessene Flexwert wird angegeben in WG. Diese Maßeinheit setzt sich zusammen aus Flexbewegungen und Gewichtsbelastung.

| Berechnung: | |
|---|---|
| Abgelesene Gewichtsbelastung | 1 600 g |
| Abgelesene Flexzahl | 326 W |
| $(1600-200) + \dfrac{326 \times 200}{500}$ | |

Üblicherweise werden je nach Exemplarstärke 3 bis 5 Werte verteilt über die Gesamtseitenzahl ermittelt. Auf diese Weise lassen sich leicht Unterschiede zwischen Anfang, Mitte und Ende erkennen. Sind in einem Exemplar zwei oder mehrere Papierqualitäten enthalten, wird die Methode entsprechend angepaßt.

Mit dieser Methode ist eine feine Differenzierung zwischen Papierqualitäten, Klebstoffen, Verarbeitungsbedingungen und Bindeverfahren möglich.

| Einstufung der Meßwerte: | |
|---|---|
| 1800 - 2000 WG | sehr gut |
| 1400 - 1600 WG | gut |
| 1000 - 1200 WG | befriedigend |

Werte unter 1000 WG können je nach Anforderung noch ausreichend sein, müssen aber kritisch betrachtet werden.

**3. Viskosität:**

Die Viskosität wird nach der ASTM D 3236-73 mit einem Brookfield-Digital-Viskosimeter (Modell RVT-DV II) bestimmt, und zwar bei 20 bis 100 Upm und Temperaturen zwischen 50 und 100 °C sowie Spindel MK 27.

**4. Film-Festigkeit**

Die Reißfestigkeit (= Zugspannung bei Bruch) wird nach DIN 53455 (ISO 527.2-1985) bestimmt.

**Patentansprüche**

**1.** Verfahren zur Klebebindung von Broschuren, Katalogen, Büchern, Schreibblocks und ähnlichen Druckschriften nach dem mehrstufigen Klebebindungsverfahren mit Hilfe eines Klebstoffsystems aus den Klebstoffen A und B, bei dem der Block zunächst mit einem vernetzbaren Film des Klebstoffs A, der mindestens einen Photoinitiator und mindestens einen Klebstoff enthält, der zu einer strahleninduzierten Reaktion befähigt ist und eine Viskosität bei der Verarbeitungstemperatur von 0,100 bis 20 Pas aufweist, in einer Dicke von weniger als 0,2 mm beschichtet wird und nach dem Abbinden schließlich mit dem Klebstoff B, der bei Verarbeitungstemperatur eine Viskosität von 1 bis 20 Pas aufweist, versehen wird, wobei nach dem Auftrag des Klebstoffs A auf der Blattkante eine Behandlung mit einer elektromagnetischen Strahlung mit Wellenlängen kleiner als 600 nm, einer Elektronenstrahlung, einer Röntgenoder Gammastrahlung erfolgt.

2. Verfahren nach Anspruch 1, **dadurch gekennzeichnet, daß** der Klebstoff A eine Viskosität bei der Verarbeitungstemperatur von 0,100 bis 10 Pas aufweist.

3. Verfahren nach Anspruch 1 oder 2, **dadurch gekennzeichnet, daß** der Klebstoff A auf einer Mischung von aliphatischen Epoxiden und/oder auf einer Mischung von Acrylat-Monomeren und/oder acrylatmodifizierten Polymeren basiert.

4. Verfahren nach Anspruch 1, 2 oder 3, **dadurch gekennzeichnet, daß** der Klebstoff B bei Verarbeitungstemperatur eine Viskosität von 5 bis 10 Pas aufweist.

5. Verfahren nach mindestens einem der vorstehenden Ansprüche, **dadurch gekennzeichnet, daß** der Klebstoff B

a) ein Schmelzklebstoff auf der Basis eines Polyamids, eines Polyurethans und insbesondere eines hochmolekularen Copolymeren von ethylenisch ungesättigten Monomeren, vorzugsweise Ethylen mit Vinylacetat, Acrylsäure und/oder Methacrylsäure oder Estern der Acrylsäure und/oder Methacrylsäure, gegebenenfalls in Kombination mit Klebkraft und Adhäsion steigernden Harzen auf Basis von natürlichen oder veresterten, dimerisierten oder polymerisierten Kolophoniumharzen, Polyterpenharzen, Phenol-Styrol-Harz, aliphatischen und/oder aromatischen Kohlenwasserstoffharzen und/oder mit Wachsen und Weichmachern oder
b) ein Dispersionsklebstoff auf der Basis von Polyvinylacetat-, Polyacrylat-, Polyvinyliden-, Polyurethan-, Polychloropren sowie Kautschuk-Dispersionen ist.

6. Verfahren nach Anspruch 1, **dadurch gekennzeichnet, daß** der Klebstoff A mit einer UV-Strahlung von 400 bis 250 nm erfolgt.

7. Broschuren, Kataloge, Bücher, Schreibblocks und ähnliche Druckartikel mit einer Rückenverklebung aus dem Klebstoffsystem gemäß mindestens einem der Ansprüche 1 bis 6, **gekennzeichnet durch** eine Filmfestigkeit der Rückenverklebung von mehr als 5 N/mm$^2$.

## Claims

1. A process for the binding of brochures, catalogues, books, writing pads and similar printed articles by the multi-step binding process using an adhesive system of the adhesives A and B, in which the inner book is first coated with a crosslinkable film of the adhesive A, which contains at least one photoinitiator and at least one adhesive capable of a radiation-induced reaction and having a viscosity at the application temperature of 0.100 to 20 Pas, in a thickness of less than 0.2 mm and, after the adhesive A has set, is finally provided with the adhesive B which has a viscosity at the application temperature of 1 to 20 Pas, the application of adhesive A to the sheet edge being followed by exposure to electromagnetic radiation with wavelengths below 600 nm, electron beam radiation, X radiation or gamma radiation.

2. A process as claimed in claim 1, **characterized in that** adhesive A has a viscosity at the application temperature of 0.100 to 10 Pas.

3. A process as claimed in claim 1 or 2, **characterized in that** the adhesive A is based on a mixture of aliphatic epoxides and/or on a mixture of acrylate monomers and/or acrylate-modified polymers.

4. A process as claimed in claim 1, 2 or 3, **characterized in that** adhesive B has a viscosity at the application temperature of 5 to 10 Pas.

5. A process as claimed in at least one of the preceding claims, **characterized in that** the adhesive B is

a) a hotmelt adhesive based on a polyamide, polyurethane and, more particularly, a high molecular weight copolymer of ethylenically unsaturated monomers, preferably ethylene, with vinyl acetate, acrylic acid and/or methacrylic acid or esters of acrylic acid and/or methacrylic acid, optionally in combination with resins which increase adhesive strength and adhesion based on natural or esterified, dimerized or polymerized rosins, polyterpene resins, phenol/styrene resin, aliphatic and/or aromatic hydrocarbon resins and/or with waxes and plasticizers or

b) a dispersion adhesive based on polyvinyl acetate, polyacrylate, polyvinylidene, polyurethane, polychloroprene and rubber dispersions.

6. A process as claimed in claim 1, **characterized in that** adhesive A is exposed to UV radiation with a wavelength of 400 to 250 nm.

7. Brochures, catalogues, books, writing pads and similar printed articles spine-glued with the adhesive system claimed in at least one of claims 1 to 6, **characterized by** a film strength of the spine adhesive of more than 5 N/mm$^2$.

## Revendications

1. Procédé de reliure par encollage de brochures, catalogues, livres, bloc-notes et autres documents imprimés semblables selon le procédé de reliure par encollage à plusieurs étapes à l'aide d'un système de colles constitué des colles A et B, dans lequel le corps est d'abord revêtu, avec une épaisseur de moins de 0,2 mm, d'un film réticulable de la colle A, qui contient au moins un photoinitiateur et au moins une colle, qui peut être soumise à une réaction provoquée par les rayonnements et présente une viscosité à la température de traitement de 0,100 à 20 Pas, puis reçoit finalement, après la prise, la colle B, qui présente à température de traitement, une viscosité de 1 à 20 Pas, un traitement par rayonnement électromagnétique avec des longueurs d'onde inférieures à 600 nm, d'un rayonnement électronique, X ou gamma étant appliqué après l'application de la colle A sur le bord de page.

2. Procédé selon la revendication 1, **caractérisé en ce que** la colle A présente une viscosité à température de traitement de 0,100 à 10 Pas.

3. Procédé selon la revendication 1 ou 2, **caractérisé en ce que** la colle A a comme base un mélange d'époxydes aliphatiques et/ou un mélange de monomères d'acrylate et/ou de polymères modifiés par acrylate.

4. Procédé selon la revendication 1, 2 ou 3, **caractérisé en ce que** la colle B à température de traitement présente une viscosité de 5 à 10 Pas.

5. Procédé selon au moins l'une des revendications précédentes, **caractérisé en ce que** la colle B :

   a) est une colle fusible a base de polyamide, de polyuréthanne et en particulier de copolymère à poids moléculaire élevé de monomères éthyléniquement insaturés, de préférence d'éthylène avec du vinviacétate, de l'acide acrylique et/ou de l'acide méthacrylique ou des esters d'acide acrylique et/ou d'acide méthacrylique, le cas échéant en combinaison avec des résines renforçant l'adhésivité et l'adhérence à base de résines de colophane naturelles ou estérifiées, dimérisées ou polymérisées, de résines de polyterpène, de résines phénol-styrène, de résines hydrocarbonées aliphatiques et/ou aromatiques et/ou avec des cires et des plastifiants, ou

   b) est une colle en dispersion à base de dispersions de polyvinylacétate, de polyacrylate, de polyvinylidbne, de polyuréthanne, de polychloroprène ainsi que de caoutchouc.

6. Procédé selon la revendication 1, **caractérisé en ce que** la colle A s'obtient avec up rayonnement UV de 400 à 250 nm.

7. Brochures, catalogues, livres, blocs-notes et articles imprimés semblables dotés d'une garniture constituée d'un système de colle selon au moins l'une des revendications 1 à 6, **caractérisé par** une solidité de film de collage de dos de plus de 5 N/mm$^2$.